# EUROPÄISCHE PATENTSCHRIFT

(11) **EP 0 760 438 B1**
(45) Veröffentlichungstag und Bekanntmachung des Hinweises auf die Patenterteilung: **02.06.1999**
(21) Anmeldenummer: 96112984.8
(22) Anmeldetag: 13.08.1996
(51) Int. Cl.: F16G 3/04

(54) **Förderband zur Verwendung in einer Fördervorrichtung mit einer Muldungszone**
Conveyor belt for use in a conveying apparatus with a trough
Bande transporteuse pour convoyeur à bande en auge

(30) Priorität: 27.08.1995 DE 19531432
(43) Veröffentlichungstag der Anmeldung: 05.03.1997
(73) Patentinhaber: MATO Maschinen- und Metallwarenfabrik Curt Matthaei GmbH & Co KG, D-63071 Offenbach (DE)
(72) Erfinder: Börner, Gerhard, Dipl.-Ing., 65203 Wiesbaden (DE)
(74) Vertreter: Quermann, Helmut, Dipl.-Ing.

(56) Entgegenhaltungen:
- EP-A- 0 507 185
- DE-A- 4 235 759
- DE-C- 926 645
- DE-U- 8 210 219
- DE-U- 8 437 242

## Beschreibung

Die Erfindung betrifft ein Förderband zur Verwendung in einer Fördervorrichtung mit einer Muldungszone, in der das Förderband mittels Rollen oder dergleichen beidseitig nach oben gebogen gestützt wird, wobei die beiden Förderbandenden mittels einer Gelenkverbindung miteinander verbunden sind, die mit den Förderbandenden verbundene Kupplungsösen und mindestens einen, die kämmend angeordneten Kupplungsösen in der Gelenkachse durchsetzenden Kupplungsstab aufweist.

Ein derartiges Förderband zur Verwendung in einer Fördervorrichtung mit einer Muldungszone ist aus der US 3,176,358 bekannt. Dort ist die Gelenkverbindung einteilig ausgebildet, wobei die mit dem jeweiligen Förderbandende verbundenen Kupplungsösen dicht nebeneinander angeordnet sind und sich über die gesamte Breite des Förderbandes erstrecken. Die kämmend angeordneten Kupplungsösen der beiden Förderbandenden durchsetzt ein flexibler Kupplungsstab. Ausgehend von der Umlenkrolle des Förderbandes eingangs der Fördervorrichtung, in deren Bereich das Förderband im wesentlichen eben ist, durchläuft es die Muldungszone, in der es eine Biegung entsprechend dem das Förderband beidseitig stützenden Rollen erfährt. Die Biegung des Förderbandes in der Ebene senkrecht zur Förderrichtung ist aufgrund des flexiblen Kupplungsstabes und des Abstandes zwischen den benachbarten Kupplungsösen möglich.

Nachteilig ist bei dem bekannten Förderband, daß die Gelenkverbindung im Biegebereich des Förderbandes einem erhöhten Verschleiß unterliegt, was die Standzeit des Förderbandes erheblich herabsetzt. So verkanten im Biegebereich des Förderbandes die ein Verbindungspaar bildenden, mit unterschiedlichen Förderbandenden verbundenen Kupplungsösen zueinander, was zwangsläufig zu einem höheren Verschleiß führt. In dem Bereich, in dem das Förderband zwischen den in einem stumpfen Winkel angeordneten Rollen nicht unterstützt ist, ist festzustellen, daß das Förderband und damit auch die Gelenkverbindung in diesem Bereich, aufgrund des auf das Förderband einwirkenden Gewichtes des von diesem transportierten Gutes, in den Zwischenraum zwischen den Rollen eingedrückt wird, was zu einer noch stärker ausgeprägten Verkantung des Verbindungspaares führt.

Es ist Aufgabe der vorliegenden Erfindung, ein zur Verwendung in einer Muldungszone einer Fördervorrichtung bestimmtes Förderband so weiterzubilden, daß es beim Durchlaufen der Muldungszone in seinem Biegebereich nur geringem Verschleiß unterworfen ist und damit eine hohe Standzeit aufweist. Abgesehen hiervon soll die Verbindung der beiden Förderbandenden einfach aufgebaut und unkompliziert herstellbar sein.

Gelöst wird die Aufgabe bei einem Förderband zur Verwendung in einer Fördervorrichtung mit einer Muldungszone der eingangs genannten Art dadurch, daß die Gelenkverbindung ausschließlich im in der Muldungszone nicht gebogenen Bereich des Förderbandes angeordnet ist.

Die Erfindung schlägt damit vor, in demjenigen Bereich, der im Betrieb des Förderbandes der verstärkten Biegung unterworfen ist, auf das Anbringen der Gelenkverbindung zu verzichten. Damit kann dort kein Verschleiß der Gelenkverbindung auftreten. Zu berücksichtigen ist in diesem Zusammenhang, daß das Förderband im Betrieb seine Ausrichtung in Längsrichtung ändert, insbesondere aufgrund des Umstandes, daß das Band ungleichmäßig beladen wird, beispielsweise mit Gestein. Nachdem im Betrieb des Förderbandes dessen seitliche Hin- und Herbewegung ohne aufwendige Hilfsmittel nicht verhindert werden kann, sollte die Gelenkverbindung dort am Förderband nicht angeordnet sein, wo die Gefahr besteht, daß der betreffende Bereich des Förderbandes beim seitlichen Hin- und Herbewegen eine nennenswerte Biegung erfährt.

Eine bevorzugte Ausführungsform sieht vor, daß das Förderband im Muldungsbereich zweifach gebogen und die Gelenkverbindung aus drei Gelenkverbindungsteilen gebildet ist. Ein Rolle stützt das Förderband horizontal, während zwei weitere Rollen in einem identischen stumpfen Winkel zur erstgenannte Rolle angeordnet sind und das Förderband in seinen beiden Seitenbereichen unterstützen.

Bei der Gelenkverbindung kommt dem Kupplungsstab im wesentlichen die Aufgabe zu, Zugkräfte von dem einen Förderbandende in das andere Förderbandende zu übertragen. Der Kupplungsstab wird damit im wesentlichen auf Scherung beansprucht. Grundsätzlich kann der Kupplungsstab damit als starres Bauteil oder als flexibles Bauteil, beispielsweise als Seil definierter Dicke, das geeignet ist, diese Scherkräfte zu übertragen, ausgebildet sein. Es ist auch denkbar, ein geringer dimensioniertes Seil vorzusehen, das mit einer hülsenförmigen Ummantelung versehen ist. Ist vorgesehen, daß der Kupplungsstab sich über die gesamte Breite des Förderbandes erstreckt, ist dieser flexibel auszubilden. Es können aber auch mehrere starre Kupplungsstäbe vorgesehen sein, wobei in diesem Fall jeder Kupplungsstab die Kupplungsösen eines Gelenkverbindungsteiles durchsetzt. Der jeweilige starre Kupplungsstab ist damit nur in dem Bereich des Förderbandes angeordnet, der beim Durchlaufen der Muldungszone keine Biegung erfährt.

Gemäß einer besonderen Ausführungsform der Erfindung ist vorgesehen, daß zwischen benachbarten Gelenkverbindungsteilen zwischen den beiden Förderbandenden ein Dichtelement angeordnet ist. Es wird damit wirksam verhindert, daß geringe Abmessungen aufweisendes Fördergut durch die zwischen benachbarten Gelenkverbindungsteilen und zwischen den beiden Förderbandenden gebildete Öffnung abgeführt wird.

Da das Dichtelement keine Kräfte, insbesondere keine Zugkräfte, zwischen den Förderbandenden zu übertragen hat und nur Dichtfunktion besitzt, reicht es grundsätzlich aus, das Dichtelement mittels starrer Verbindungselemente zu halten, wobei jedes Verbindungselement mit beiden Förderbandenden verbunden ist. Zweckmäßig ist dabei auf jeder Seite des Förderbandendes mindestens ein Verbindungselement angeordnet, wobei die Verbindungselemente zwischen sich das Dichtelement aufnehmen. In einfachster Gestaltung sind die Verbindungselemente als Platten ausgebildet, die sich vom einen zum anderen Förderbandende erstrecken und mit diesen verbunden sind, wobei es ausreicht, wenn das Dichtelement lose zwischen den Verbindungselementen gehalten ist. Für den Fall, daß die Gelenkverbindungsteile ein flexibler Kupplungsstab durchsetzt, weist das Dichtelement einen Durchgangskanal zur Aufnahme des Kupplungsstabes auf.

Bei Verwendung eines flexiblen Kupplungsstabes sieht eine modifizierte Ausgestaltung vor, daß das Dichtelement mittels mindestens einer Öse und des flexiblen Kupplungsstabes gehalten ist, wobei die Öse mit einem Förderbandende verbunden ist und der Kupplungsstab die Öse und einen Durchgangskanal des Dichtelementes durchsetzt. In einfachster Gestaltung kann damit die Fixierung des Dichtelementes mittels einer einzigen Öse und des Kupplungsstabes erfolgen, wobei diese Öse beispielsweise genauso ausgebildet ist, wie eine Kupplungsöse der Gelenkverbindung, die dort allerdings im Zusammenwirken mit der komplementären Kupplungsöse der Übertragung von Kraft dient, während die der Fixierung des Dichtelementes dienende Öse mit keiner anderen Öse unmittelbar zusammenwirkt. Als vorteilhaft wird es aber angesehen, wenn eine Öse mit einem Förderbandende und eine andere Öse mit dem anderen Förderbandende verbunden ist und die beiden Ösen auf gegenüberliegenden Seiten das Dichtelement halten. Da der Kupplungsstab das Dichtelement durchsetzt, wird es als vorteilhaft angesehen, wenn die Öse in mindestens eine Ausnehmung des Dichtelementes eingreift, wobei dieser Eingriff in Längsrichtung des Durchgangskanals im wesentlichen spielfrei erfolgen sollte. Ist eine Öse mit einem Förderbandende und die andere Öse mit dem anderen Förderbandende verbunden, greift zweckmäßig die eine Öse auf einer Seite des Dichtelementes in deren Ausnehmung bzw. Ausnehmungen ein und die andere Öse auf der gegenüberliegenden Seite des Dichtelementes in deren Ausnehmung bzw. Ausnehmungen.

Die Dichtelemente können beliebig gestaltet sein. Vorteilhaft sind sie plattenförmig ausgebildet.

Eine bevorzugte Gestaltung sieht schließlich vor, daß das Dichtelement auf seinen den Förderbandenden zugewandten Seiten elastisch ausgebildet ist. Diese Gestaltung trägt dem Umstand Rechnung, daß sich der Spalt zwischen den Förderbandenden im Bereich des Dichtelementes in Abhängigkeit von den vom Förderband zu übertragenden Zugkräften ändert. Weitet sich der Spalt, kann dies aufgrund der elastischen Ausbildung des Dichtelementes kompensiert werden, so daß in allen Betriebszuständen des Förderbandes die Abdichtung im Bereich zwischen den Gelenkverbindungsteilen und zwischen den Förderbandenden sichergestellt ist.

Weitere Merkmale der Erfindung sind der Beschreibung der Figuren und der Figuren selbst dargestellt. Die Erfindung wird nachstehend anhand mehrerer Ausführungsbeispiele, die in der Zeichnung dargestellt sind, näher beschrieben, ohne hierauf beschränkt zu sein. Es zeigt:
- Figur 1: eine erste Ausführungsform des erfindungsgemäßen Förderbandes, gezeigt in einer Draufsicht im Verbindungsbereich der beiden Förderbandenden, veranschaulicht bei ebenem Förderband,
- Figur 2: eine Stirnansicht des in Figur 1 gezeigten Förderbandes, veranschaulicht beim Durchlaufen der Muldungszone,
- Figur 3: eine zweite Ausführungsform des Förderbandes, gezeigt in einer Draufsicht im Verbindungsbereich der beiden Förderbandenden, veranschaulicht bei ebenem Förderband,
- Figur 4: eine Stirnansicht des in Figur 3 gezeigten Förderbandes, veranschaulicht beim Durchlaufen der Muldungszone,
- Figur 5a: ein modifiziertes Dichtelement von der Seite gesehen,
- Figur 5b: das Dichtelement gemäß Figur 5a von oben gesehen,
- Figuren 6a und 6b: ein modifiziertes Dichtelement von der Seite und von oben gesehen und
- Figuren 7a, 7b: ein weiter modifiziertes Dichtelement von der Seite und von oben gesehen.

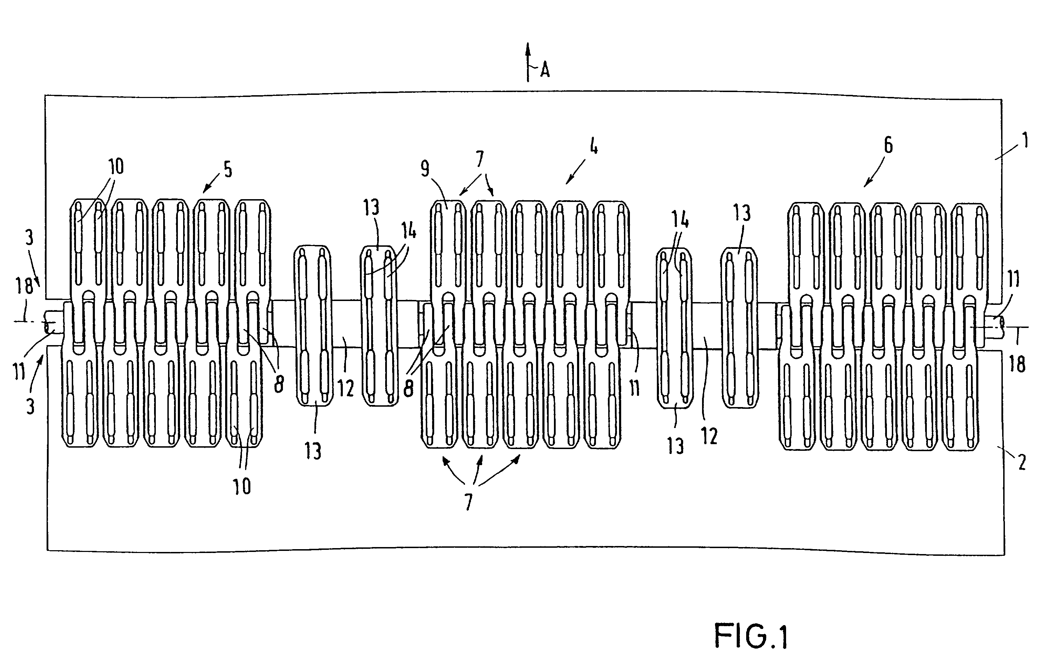

In Figur 1 sind die beiden miteinander verbundenen Förderbandenden 1 und 2 gezeigt. Bezogen auf die Förderrichtung A weist das Förderband 3 im Bereich seiner Mitte ein Gelenkverbindungsteil 4 und im Bereich jeder seiner beiden Seiten ein Gelenkverbindungsteil 5 bzw. 6 auf. Die Gelenkverbindungsteile 4 bis 6 sind identische ausgelegt. Jedes Gelenkverbindungsteil besteht im Ausführungsbeispiel aus zehn Verbindungselementen 7, wobei fünf Verbindungselemente mit dem einen Förderbandende 1 und die anderen fünf Verbindungselemente mit dem anderen Förderbandende 2 verbunden sind und miteinander kämmen. Jedes Verbindungselement 7 weist zwei parallel zueinander angeordnete, U-förmig ausgebildete Kupplungsösen 8 sowie zwei parallel zueinander angeordnete Halteschenkel 9 auf, in die die beiden Kupplungsösen 8 münden. Die Halteschenkel 9 sind plattenförmig ausgebildet und nehmen das jeweilige Förderbandende 1 bzw. 2 zwischen sich auf. Jeder Halteschenkel 9 ist mit vier Löchern versehen, wobei die Löcher der Halteschenkel 9 miteinander fluchten. Zwei Krampen 10 durchsetzen mit ihren Schenkeln diese Löcher und das Förderband 3. Die jeweilige Krampe 10 ist im Bereich ihrer beiden freien Enden umgebogen. Auf diese Art und Weise ist eine feste Verbindung des jeweiligen Halteelementes 7 mit dem zugeordneten Förderbandende 1 bzw. 2 sichergestellt. Die Verbindungselemente 7 des jeweiligen Gelenkverbindungsteiles 4, 5 bzw. 6 sind in geringem Abstand voneinander angeordnet. Durch die miteinander kämmenden Kupplungsösen 8 des jeweiligen Gelenkverbindungsteiles 4, 5 bzw. 6 ist ein starrer Kupplungsstab 11 gesteckt und gibt damit die Gelenkachse 18 vor. Zwischen benachbarten Gelenkverbindungsteilen 4 und 5 bzw. 4 und 6 ist zwischen den beiden Förderbandenden 1 und 2 ein plattenförmiges Dichtelement 12 angeordnet, das in geringem Abstand zu den diesem benachbarten Verbindungselementen 7 der Gelenkverbindungsteile 4 und 5 bzw. 4 und 6 endet. Befestigt ist das Dichtelement 12 mittels Verbindungselementen in Art starrer Platten 13, wobei auf jeder Seite des Förderbandes 3 parallel zueinander zwei Platten 13 angeordnet sind, die jeweils vier Löcher zur Aufnahme von weiteren Krampen 14 aufweisen, die beidseitig des Dichtelementes 12 die Förderbandenden 1 und 2 durchsetzen. Bezogen auf die Förderrichtung A ist die Länge der jeweiligen Platte 13 etwa so groß, wie die Länge eines Verbindungselementes 7.

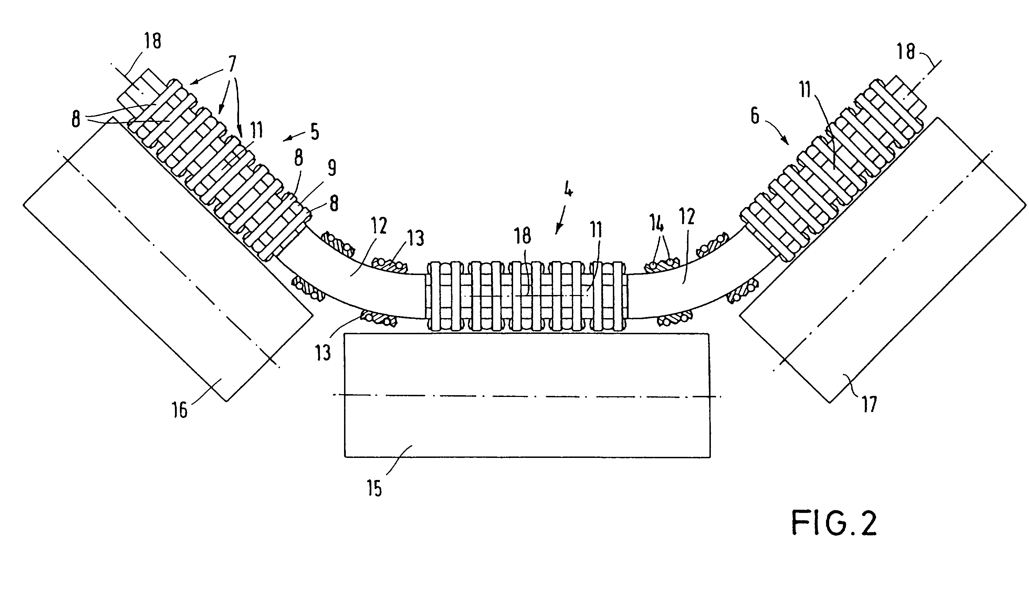

Figur 2 veranschaulicht die Anordnung des erfindungsgemäßen Förderbandes 3 beim Durchlaufen der Muldungszone der Fördervorrichtung. Gezeigt ist nur das in Förderrichtung A vorlaufende Förderbandende 1 mit den mit diesem verbundenen Verbindungelementen 7, ferner die beiden Dichtelemente 12 und die Platten 13 zum Befestigen der Dichtelemente 12 am Föderbandende 1 sowie die Kupplungsstäbe 11. In der Figur ist veranschaulicht, daß das mittlere Gelenkverbindungsteil 5 von einer mittleren, um eine horizontale Achse drehbaren Rolle 15 gestützt wird. Zwei weitere Rollen 16 und 17 sind jeweils unter einem stumpfen Winkel der Rolle 15 angeordnet und stützen die anderen Gelenkverbindungsteile 5 und 6. Zwischen den Gelenkverbindungsteilen 4 und 5 bzw. 5 und 6 ist das Förderband 3 gebogen und in diesen Bereichen nicht unterstützt.

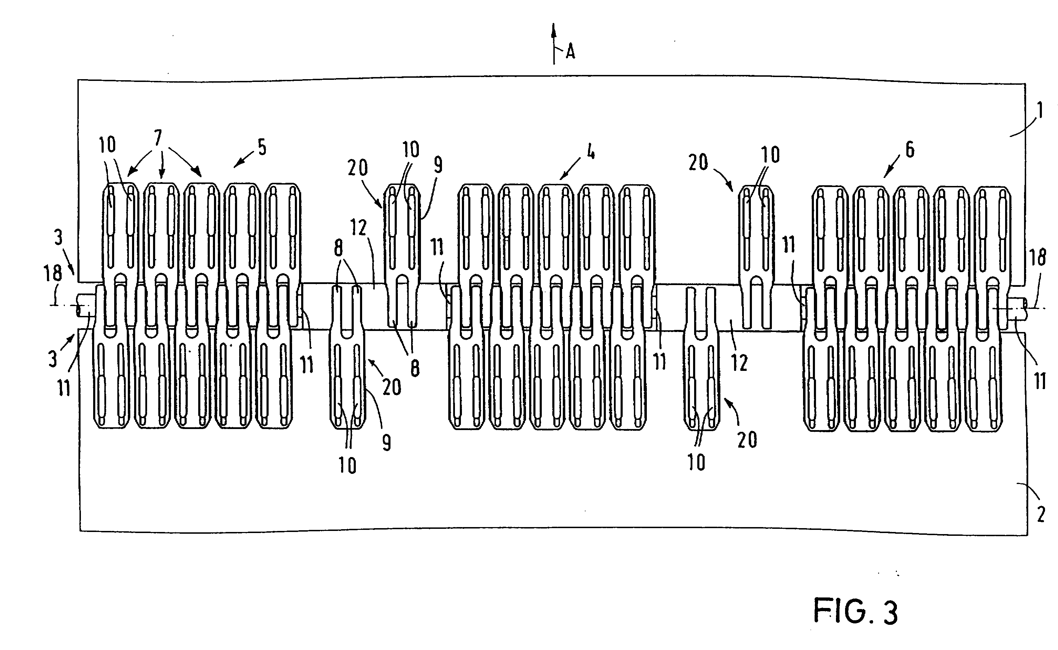

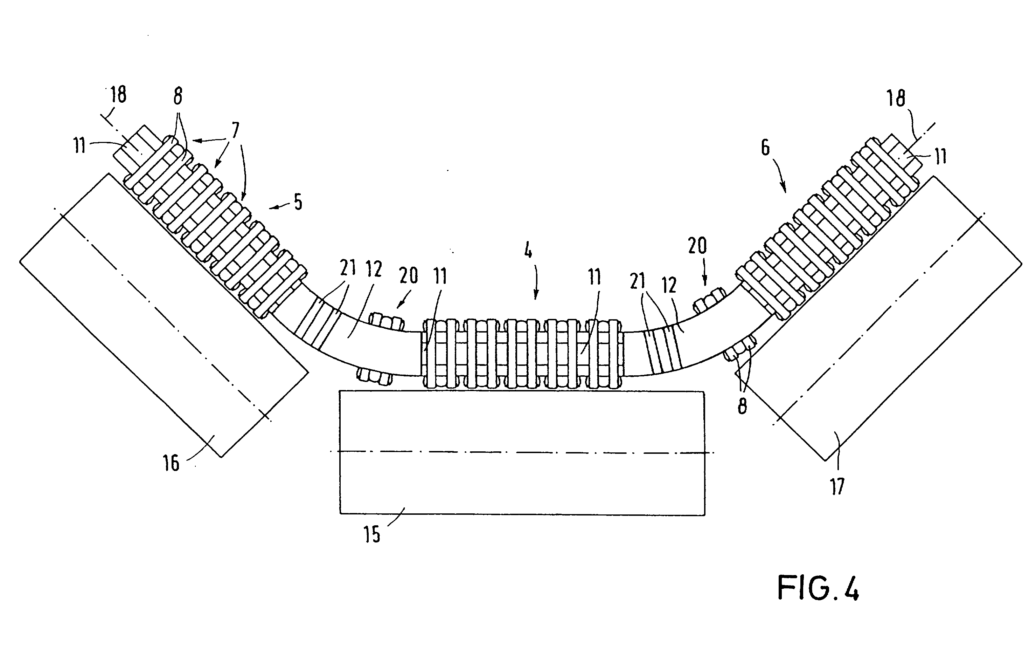

Die Ausführungsformen nach den Figuren 3 bis 7b unterscheiden sich von der Ausführungsform nach den Figuren 1 und 2 nur durch die Ausbildung, Lagerung und Befestigung des Dichtelementes 12. Mit der Ausführungsform nach den Figuren 1 und 2 übereinstimmende Teile sind in den nachfolgenden Figuren der Einfachheit halber mit denselben Bezugsziffern bezeichnet.

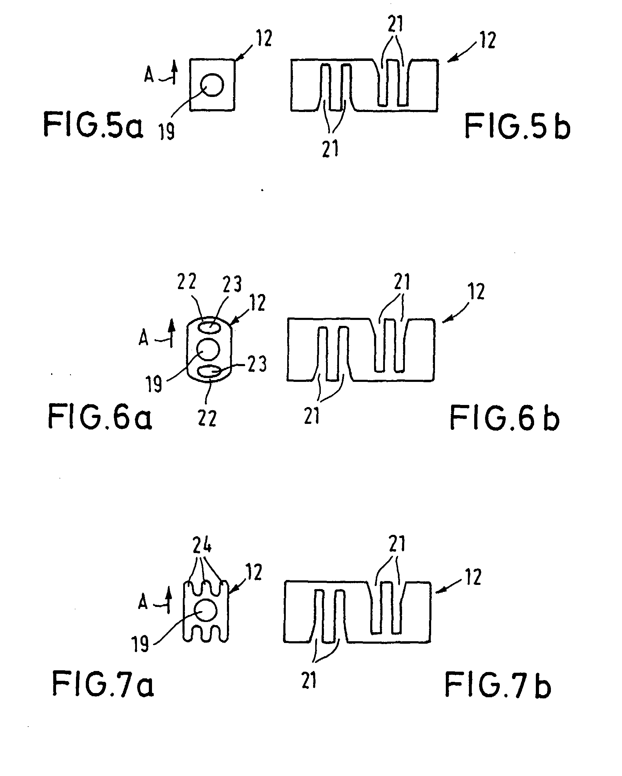

Wie der Darstellung der Figuren 5a und 5b zu entnehmen ist, weist das Dichtelement 12 in einer ersten Ausgestaltung Rechteckquerschnitt auf und ist mit einem Durchgangskanal 19 versehen, den der flexible Kupplungsstab 11 durchsetzt. Gehalten wird das Dichtelement 12 mittels dieses Kupplungsstabes 11 und zweier Ösen 20, wobei die jeweilige Öse 20 identisch gestaltet ist, wie das vorstehend beschriebene Verbindungselement 7 und auch identisch wie dieses mit dem zugeordneten Förderbandende 2 verbunden wird. Wie der Darstellung der Figur 5b zu entnehmen ist, weist das Dichtelement 12 auf jeder seiner beiden gegenüberliegenden Seiten zwei schlitzförmige, parallel zueinander angeordnete Ausnehmungen 21 auf, in die die U-förmig ausgebildeten Ösenabschnitte 8 der Ösen 20 eingesteckt sind, so daß nach der seitlich zueinander versetzten Befestigung der Ösen 20 des jeweiligen Dichtelementes 12 an den Förderbandenden 1 und 2 sowie Einstecken in die Ausnehmungen 21 des Dichtelementes 12 der flexible Kupplungsstab 11 durch die Verbindungselemente 7, das Dichtelement 12 und die Ösen 20 zum Verbinden der Förderbandenden 1 und 2 hindurchgesteckt werden kann.

Figur 5a verdeutlicht mit dem Pfeil A die in Figur 1 dargestellte Zugrichtung des Förderbandes. Diese gilt auch bezüglich der in den Figuren 6a und 7a gezeigten Modifizierungen des Dichtelementquerschnittes. Bei der Ausführungsform nach Figur 6a weist das elastische Dichtelement 12 auf gegenüberliegenden Seiten nach außen gekrümmte Wölbungsabschnitte 22 auf, denen parallel zum Durchgangskanal 19 angeordnete Durchgangskanäle 23 zugeordnet sind. Ohne Belastung des Förderbandes, bei dem die Förderbandenden dichter beieinander zu liegen kommen, ist das Dichtelement stärker zusammengedrückt, so daß die Durchgangskanäle 23 geschlossen sind, während sich unter Belastung des Bandes die Förderbandenden voneinander weg bewegen und das Dichtelement 12 aufgrund des elastischen Rückstellvermögens dieser Relativbewegung der Förderbandenden folgt. Um denselben Effekt zu erzielen, kann alternativ, wie in Figur 7 dargestellt, das Dichtelement 12 mit einer Mehrzahl sich in Richtung des Pfeiles A bzw. entgegengesetzt zu diesem erstreckenden Dichtlippen 24 versehen sein, die sich über die gesamte Breite des Dichtelementes 12 erstrecken und bei relativ entlastetem Förderband zusammengedrückt werden, sich hingegen bei relativ belastetem Förderband Längen und damit nach wie vor an der Stoßfläche des jeweiligen Förderbandendes anliegen.

## Patentansprüche

1. Förderband zur Verwendung in einer Fördereinrichtung mit einer Muldungszone, in der das Förderband mittels Rollen oder dergleichen beidseitig nach oben gebogen gestützt wird, wobei die beiden Föderbandenden mittels einer Gelenkverbindung miteinander verbunden sind, die mit den Förderbandenden verbundene Kupplungsösen und mindestens einen, die kämmend angeordneten Kupplungsösen in der Gelenkachse durchsetzenden Kupplungsstab aufweist, **dadurch gekennzeichnet,** daß die Gelenkverbindung (4, 5, 6) ausschließlich im in der Muldungszone nicht gebogenen Bereich des Förderbandes (3) angeordnet ist.

2. Förderband nach Anspruch 1, **dadurch gekennzeichnet,** daß es im Muldungsbereich zweifach gebogen und die Gelenkverbindung aus drei Gelenkverbindungsteilen (4, 5, 6) gebildet ist.

3. Förderband nach Anspruch 1 oder 2, **dadurch gekennzeichnet,** daß ein flexibler Kupplungsstab (11) die Kupplungsösen (8) der Gelenkverbindung (4, 5, 6) durchsetzt.

4. Förderband nach Anspruch 1 oder 2, **dadurch gekennzeichnet,** daß mehrere starre Kupplungsstäbe (11) vorgesehen sind, wobei jeder Kupplungsstab (11) die Kupplungsösen (8) eines Gelenkverbindungsteils (4 bzw. 5 bzw. 6) durchsetzt.

5. Förderband nach einem der Ansprüche 1 bis 4, **dadurch gekennzeichnet**, daß zwischen benachbarten Gelenkverbindungsteilen (4, 5 bzw. 4, 6) zwischen den beiden Förderbandenden (1, 2) ein Dichtelement (12) angeordnet ist.

6. Förderband nach Anspruch 5, **dadurch gekennzeichnet**, daß das Dichtelement (12) mittels starrer Verbindungselemente (13) gehalten ist, wobei jedes Verbindungselement (13) mit beiden Förderbandenden (1, 2) verbunden ist.

7. Förderband nach Anspruch 6, **dadurch gekennzeichnet**, daß auf jeder Seite des Förderbandendes (1; 2) mindestens ein Verbindungselement (13) angeordnet ist, wobei die Verbindungselemente (13) zwischen sich das Dichtelement (12) aufnehmen.

8. Förderband nach Anspruch 5, **dadurch gekennzeichnet**, daß das Dichtelement (12) mittels mindestens einer Öse (20) und des flexiblen Kupplungsstabes (11) gehalten ist, wobei die Öse (20) mit einem Förderbandende (1 bzw. 2) verbunden ist und der Kupplungsstab (11) die Öse (20) und einen Durchgangskanal (19) des Dichtelements (12) durchsetzt.

9. Förderband nach Anspruch 8, **dadurch gekennzeichnet**, daß die Öse (20) in mindestens eine Ausnehmung (21) des Dichtelementes (12) eingreift.

10. Förderband nach Anspruch 9, **dadurch gekennzeichnet**, daß die Öse (20) in Längsrichtung des Durchgangskanals (19) im wesentlichen spielfrei in das Dichtelement (12) eingreift.

11. Förderband nach einem der Ansprüche 8 bis 10, **dadurch gekennzeichnet**, daß eine Öse (20) mit einem Förderbandende (1) und eine andere Öse (20) mit dem anderen Förderbandende (2) verbunden ist, wobei die eine Öse (20) auf einer Seite des Dichtelementes (12) in deren Ausnehmung (21) bzw. Ausnehmungen (21) eingreift und die andere Öse (20) auf der gegenüberliegenden Seite des Dichtelements (12) in deren Ausnehmung (21) bzw. Ausnehmungen (21) eingreift.

12. Förderband nach einem der Ansprüche 5 bis 11, **dadurch gekennzeichnet**, daß das Dichtelement (12) plattenförmig ausgebildet ist.

13. Förderband nach einem der Ansprüche 5 bis 12, **dadurch gekennzeichnet**, daß das Dichtelement (12) zumindest auf seinen den Förderbandenden (1, 2) zugewandten Seiten elastisch ausgebildet ist.

## Claims

1. Conveyer belt for use in a conveying device with a trough zone wherein the conveyer belt is on both sides bent upwards and supported by means of rollers or the like, and both conveyer band ends are joined by means of a hinge connection which comprises coupling eyelets which are connected to the conveyer belt ends and at least one coupling bar which passes through the meshingly configured coupling eyelets in the hinge axis, **characterised in that** the hinge connection (4, 5, 6) is configured exclusively in the area of the conveyer belt (3) which is not bent in the trough zone.

2. Conveyer belt according to Claim 1, **characterised in that** it is bent twice in the trough zone, and the hinge connection is formed of three hinge joint members (4, 5, 6).

3. Conveyer belt according to Claim 1 or 2, **characterised in that** a flexible coupling bar (11) passes through the coupling eyelets (8) of the hinge connection (4, 5, 6).

4. Conveyer belt according to Claim 1 or 2, **characterised in that** a plurality of rigid coupling bars (11) are provided, and each coupling bar (11) passes through the coupling eyelets (8) of a hinge joining member (4 or 5 or 6).

5. Conveyer belt according to one of Claims 1 to 4, **characterised in that** between adjacent hinge joining members (4, 5 or 4, 6) a sealing element (12) is arranged between both conveyer belt ends (1, 2).

6. Conveyer belt according to Claim 5, **characterised in that** the sealing element (12) is held by means of rigid joining elements (13), and each joining element (13) is connected to both conveyer belt ends (1, 2).

7. Conveyer belt according to Claim 6, **characterised in that** on each side of the conveyer belt end (1; 2) is arranged at least one connecting element (13), and the connecting elements (13) accommodate between each other sealing element (12).

8. Conveyer belt according to Claim 5, **characterised in that** the sealing element (12) is held by means of at least one eyelet (20) and the flexible coupling bar (11), and the eyelet (20) is joined to a conveyer belt end (1 or 2), and the coupling bar (11) passes through the eyelet (20) and a channel (19) of the sealing element (12).

9. Conveyer belt according to Claim 8, **characterised in that** the eyelet (20) engages at least one recess (21) of the sealing element (12).

10. Conveyer belt according to Claim 9, **characterised in that** the eyelet (20) engages the sealing element (12) in the longitudinal direction of the channel (19) and essentially tree of play.

11. Conveyer belt according to one of Claims 8 to 10, **characterised in that** one eyelet (20) is connected to one conveyer belt end (1) and another eyelet (20) to the other conveyer belt end (2), and the one eyelet (20) engages on one side of the sealing element (12) in its recess (21) or recesses (21), and the other eyelet (20) on the opposite side of the sealing element (12) in its recess (21) or recesses (21).

12. Conveyer belt according to one of Claims 5 to 11, **characterised in that** the sealing element (12) is of plateshaped design.

13. Conveyer belt according to one of Claims 5 to 12, **characterised in that** the sealing element (12) is at least at its sides facing towards the conveyer belt ends (1, 2) of elastic design.

## Revendications

1. Bande transporteuse pour utilisation dans un dispositif de transport comportant une zone en auge dans laquelle la bande est soutenue et courbée vers le haut par des galets ou organes analogues disposés des deux côtés, les deux extrémités de la bande étant réunies par une liaison articulée comportant des oeillets d'accouplement reliés aux extrémités de la bande et au moins une tige d'accouplement traversant, selon l'axe de l'articulation, les oeillets étant disposés en peigne,
caractérisée en ce que
la liaison articulée (4, 5, 6) est montée exclusivement dans la zone de la bande transporteuse (3) qui ne se trouve pas pliée dans la zone en auge.

2. Bande transporteuse selon la revendication 1,
caractérisée en ce que
cette bande est doublement pliée dans la zone en auge et la liaison articulée est en trois parties (4, 5, 6).

3. Bande transporteuse selon les revendications 1 ou 2,
caractérisée en ce qu'
une tige d'accouplement flexible (11) traverse les oeillets d'accouplement (8) de la liaison articulée (4, 5, 6).

4. Bande transporteuse selon les revendications 1 ou 2,
caractérisée en ce qu'
il est prévu plusieurs tiges rigides d'accouplement (11), chacune d'elles (11) traversant les oeillets d'accouplement (8) d'une partie de liaison articulée (4 ou 5 ou 6).

5. Bande transporteuse selon les revendications 1 à 4,
caractérisée en ce qu'
un élément d'étanchéité (12) est monté entre deux parties d'articulation voisines (4, 5 ou 4, 6) et entre les deux extrémités (1, 2) de la bande transporteuse.

6. Bande transporteuse selon la revendication 5,
caractérisée en ce que
l'élément d'étanchéité (12) est maintenu par des éléments rigides de liaison (13) dont chacun est relié aux extrémités (1, 2) de la bande.

7. Bande transporteuse selon la revendication 6,
caractérisée en ce que
sur chaque côté de la bande transporteuse (1, 2) est disposé au moins un élément de liaison (13), l'élément d'étanchéité (12) étant logé entre les éléments de liaison (13).

8. Bande transporteuse selon la revendication 5,
caractérisée en ce que
l'élément de liaison (12) est maintenu par au moins un oeillet (20) et la tige d'accouplement flexible (11), l'oeillet (20) était relié à une extrémité (1 ou 2) de la bande transporteuse tandis que la tige d'accouplement (11) traverse l'oeillet (20) et un canal de passage (19) prévu dans l'élément d'étanchéité.

9. Bande transporteuse selon la revendication 8,
caractérisée en ce que
l'oeillet (20) est en prise dans au moins un évidement (21) de l'élément d'étanchéité.

10. Bande transporteuse selon la revendication 9,
caractérisée en ce que
l'oeillet (20) est, selon la direction longitudinale du canal de passage (19) en prise pratiquement sans jeu dans l'élément d'étanchéité (12).

11. Bande transporteuse selon une des revendications 8 à 10,
caractérisé en ce qu'
un oeillet (20) est en prise avec une extrémité de bande (1) et l'autre oeillet (20) avec l'autre extrémité de bande (2), le premier oeillet (20) étant en prise sur un côté de l'élément d'étanchéité (12) dans un ou des évidements (21) de cet élément, tandis que le second oeillet (20) est en prise sur le côté opposé de l'élément d'étanchéité (12) dans un ou des évidements (21) de cet élément.

12. Bande transporteuse selon une des revendications 5 à 11,
caractérisée en ce que
l'élément d'étanchéité (12) a la forme d'une plaque.

13. Bande transporteuse selon une des revendications 5 à 12,
caractérisée en ce que
l'élément d'étanchéité (12) a une constitution élastique au moins sur ses côtés en regard des extrémités (1, 2) de la bande transporteuse.
